# EUROPÄISCHE PATENTANMELDUNG

(11) **EP 3 290 662 A1**
(43) Veröffentlichungstag der Anmeldung: **07.03.2018**
(21) Anmeldenummer: 17182046.7
(22) Anmeldetag: 19.07.2017
(51) Int. Cl.: F01D 25/24

(54) **VERKLEIDUNGSELEMENT EINER STRÖMUNGSMASCHINE UND ENTSPRECHENDE VERBINDUNGSANORDNUNG**

(30) Priorität: 27.07.2016 DE 102016213813
(71) Anmelder: MTU Aero Engines AG, 80995 München (DE)
(72) Erfinder: Klötzer, Alexander, 82256 Fürstenfeldbruck (DE); Feldmann, Manfred, 82223 Eichenau (DE)

(57) **Zusammenfassung**

Die Erfindung betrifft ein Verkleidungselement (10), insbesondere Hitzeschildelement oder Gehäuseelement, einer Strömungsmaschine, insbesondere Gasturbine, umfassend:
einen Befestigungsabschnitt (12) mit wenigstens einer Öffnung (14-1, 14-2), durch die eine insbesondere stiftartig oder bolzenartig ausgebildete Verbindungseinheit (42) entlang einer Öffnungsachse (OA) einführbar ist,
einen an den Befestigungsabschnitt (12) anschließenden Verkleidungsabschnitt (16), wobei der Befestigungsabschnitt (12) und der Verkleidungsabschnitt (16) einstückig sowie ringförmig oder ringsegmentförmig ausgebildet sind.

Erfindungsgemäß wird vorgeschlagen, dass die Öffnung (14-1, 14-2) in einer im Befestigungsabschnitt (12) ausgebildeten Vertiefung (24-21, 24-2) vorgesehen, wobei die Vertiefung (24-1, 24-2) im Wesentlichen konzentrisch um die Öffnung (14-1, 14-2) ausgebildet ist.

## Beschreibung

Die vorliegende Erfindung betrifft ein Verkleidungselement, insbesondere Hitzeschildelement oder Gehäuseelement, einer Strömungsmaschine, insbesondere Gasturbine, umfassend: einen Befestigungsabschnitt mit wenigstens einer Öffnung, durch die eine insbesondere stiftartig oder bolzenartig ausgebildete Verbindungseinheit entlang einer Öffnungsachse einführbar ist; einen an den Befestigungsabschnitt anschließenden Verkleidungsabschnitt, wobei der Befestigungsabschnitt und der Verkleidungsabschnitt einstückig sowie ringförmig oder ringsegmentförmig ausgebildet sind.

Bei der Befestigung von Verkleidungselementen, die insbesondere als dünnwandige Bauteile vorzugsweise aus einem Metallblech ausgebildet sind, mittels Nieten oder Schrauben tritt regelmäßig das Problem auf, dass zum einen hohe Schwingungsbelastungen und zum anderen große Temperaturschwankungen und mechanische Belastungen auftreten können. Entsprechend sollte die Befestigung dieser Verkleidungselement sehr geringe Toleranzen aufweisen, hohen Belastungen standhalten und große Wärmeausdehnungen ausgleichen können. Entsprechend sind sehr hohe Fertigungsgenauigkeiten erforderlich. Für den Ausgleich von Fertigungstoleranzen werden üblicherweise Tellerfedern eingesetzt, die aber Bauraum beanspruchen und die Materialwahl stark einschränken.

Wärmeausdehnungen von Verkleidungselementen können oft nur durch sogenannte Schiebesitze ausgeglichen werden, die ein gewisses Mindestspiel aufweisen müssen, damit eine relative Verschiebung von Bauteilen gegeneinander bei Temperaturschwankungen möglich ist. Dies führt allerdings zu einer weniger präzisen Befestigung von Bauteilen, so dass Bauteile zum Schwingen angeregt werden können. Derartiges Schwingen erhöht den Verschleiß und kann auch zum Versagen eines entsprechenden Bauteils bzw. Verleidungselements führen.

Aus der WO 2015/102702A ist aus der Fig. 2 ein als Hitzeschild ausgeführtes Verkleidungselement bekannt.

Aufgabe der vorliegenden Erfindung ist es, ein Verkleidungselement bereitzustellen, das hohe Schwingungsbelastungen und mechanische Belastungen aushält und gleichzeitig Wärmeausdehnungen kompensiert.

Diese Aufgabe wird durch die Gegenstände der unabhängigen Ansprüche gelöst.

Sie wird insbesondere dadurch gelöst, dass bei einem Verkleidungselement die Öffnung in einer im Befestigungsabschnitt ausgebildeten Vertiefung vorgesehen ist, wobei die Vertiefung im Wesentlichen konzentrisch um die Öffnung ausgebildet ist.

Die ringförmige oder ringsegmentförmige Ausgestaltung des Verkleidungselements bezieht sich auf die Maschinenachse der Strömungsmaschine. Die konzentrische Ausgestaltung der Vertiefung bezieht sich auf eine die Öffnung zentral durchstoßende Öffnungsachse. Die Öffnungsachse kann bezogen auf die Strömungsmaschineparallel zur Axialrichtung der Strömungsmaschine oder parallel zur Radialrichtung oder auch geneigt zu diesen beiden Richtungen verlaufen.

Durch die Bereitstellung einer Vertiefung im Befestigungsabschnitt wird ein integral ausgebildetes federndes Element geschaffen. Entsprechend werden bei der Montage eines solchen Verkleidungselements weniger Einzelteile, insbesondere weniger oder keine Tellerfedern benötigt. Die Vertiefung ermöglicht durch ihre federnde Wirkung ein Absorbieren von Schwingungen, ohne dass durch Schwingungen eine starke Relativbewegung von verbundenen Bauteilen zueinander hervorgerufen werden. Hierdurch kann der Verschleiß an dem Verkleidungselement bzw. einem damit verbunden Bauteil verringert werden.

Die Vertiefung kann sickenartig ausgebildet sein. Allerdings weist eine solche Sicke keine rinnenartige also deutlich längliche Form auf, sondern ist insbesondere kreisförmig, ellipsenförmig oder oval ausgestaltet.

Die Öffnung kann kreisförmig oder langlochförmig ausgebildet sein. Bei einer kreisförmigen Öffnung, die auch als Rundloch bezeichnet werden kann, wird ein mit der Verbindungseinheit gebildeter fester Sitz für das Verkleidungselement an einem anderen Bauteil geschaffen. Wenn die Öffnung die Form eines Langlochs aufweist, ist das Verkleidungselement entlang des Langlochs relativ zur Verbindungseinheit beweglich, so dass insbesondere Wärmeausdehnungen kompensiert werden können. Mittels einer langlochförmigen Öffnung kann ein Schiebesitz bereitgestellt werden.

Die Vertiefung kann eine bezogen auf die Öffnungsachse axiale Tiefe aufweisen, die etwa dem 0,9-fachen bis 1,5-fachen einer Dicke des Befestigungsabschnitts entspricht. Hierdurch kann eine Vertiefung bereitgestellt werden, die wenig Bauraum einnimmt. Ferner kann je nach Tiefe auch der mögliche Federweg, insbesondere entlang der Öffnungsachse, eingestellt werden.

Die Vertiefung kann einen die Öffnung umgebenden Randabschnitt aufweisen, wobei der Randabschnitt im Wesentlichen parallel zu einer die Vertiefung umgebenden Oberfläche des Befestigungsabschnitts ausgebildet ist. Der Randabschnitt dient insbesondere dazu, eine um die Öffnung herumgehende Auflagefläche bereitzustellen, an der der Befestigungsabschnitt an einem weiteren Bauteil abgestützt werden kann.

Das Verkleidungselement kann wenigstens zwei Öffnungen mit einer jeweiligen Vertiefung umfassten, wobei der Befestigungsabschnitt im Bereich der Öffnungen eine in einer Oberflächenebene des Befestigungsabschnitts liegende Höhe aufweist, die größer ist, als die Höhe zwischen zwei benachbarten Öffnungen. Bezogen auf eine ringförmige oder ringsegmentförmige Ausgestaltung können im Befestigungsabschnitt mehrere in Umfangsrichtung verteilt angeordnete Öffnungen vorgesehen sein. In diesem Zusammenhang können benachbarte Öffnungen die gleiche Form aufweisen oder voneinander verschieden sein. Beispielsweise kann eine Öffnung kreisförmig als Festsitz ausgebildet sein und eine oder mehrere benachbarte Öffnungen können langlochförmig als Schiebesitz ausgebildet sein.

Das Verkleidungselement kann aus einem Metallblech oder aus karbonfaserverstärktem Kunststoff hergestellt sein. Dabei kann die Vertiefung zwei Wölbungen in unterschiedliche Richtungen aufweisen. Die Vertiefung wird also ausgehend von einer Oberfläche des Befestigungsabschnitts in einer Art S-förmigen Abfolge von zwei Wölbungen ausgebildet, so dass der bereits oben erwähnte Randabschnitt auf einem anderen Niveau liegt als die Oberfläche des Befestigungsabschnitts. Im Falle eines Metallblechs kann die Öffnung durch Tiefziehen hergestellt sein.

Die Erfindung betrifft ferner auch eine Verbindungsanordnung in einer Strömungsmaschine, insbesondere Gasturbine, zwischen einem oben beschriebenen Verkleidungselement und einem weiteren Bauteil der Strömungsmaschine, wobei das Bauteil und das Verkleidungselement im Bereich der wenigstens einen Öffnung des Befestigungsabschnitts des Verkleidungselements mittels einer Verbindungseinheit miteinander verbunden sind. Dabei ist vorgesehen, dass der Befestigungsabschnitt im Bereich der Vertiefung um die Öffnung näher am weiteren Bauteil angeordnet ist als außerhalb der Vertiefung und dass um die Verbindungseinheit herum wenigstens eine Unterlegscheibe angeordnet ist, die mit dem Befestigungsabschnitt in Kontakt steht.

Um die Verbindungseinheit herum können zwei Unterlegscheiben angeordnet sein, zwischen denen der Befestigungsabschnitt aufgenommen ist, wobei eine der Unterlegscheiben am weiteren Bauteil anliegt.

Die Verbindungseinheit kann eine Nietverbindung oder eine Schraubverbindung, insbesondere Schrauben-Mutter-Verbindung, sein.

Im Bereich der Vertiefung kann auf der dem weiteren Bauteil abgewandten Seite des Befestigungsabschnitts eine Distanzhülse um die Verbindungseinheit herum angeordnet sein.

Nachfolgend wird die Erfindung unter Bezugnahme auf die anliegenden Figuren beispielhaft und nicht einschränkend beschrieben.
Fig. 1 zeigt eine Ausführungsform eines Verkleidungselements in einer vereinfachten und schematischen Perspektivdarstellung, insbesondere von schräg vorne bezogen auf eine Eibaustellung in einer Gasturbine.
Fig. 2 zeigt das Verkleidungselement der Fig. 1 in einer weiteren vereinfachten und schematischen Perspektivansicht, insbesondere von schräg hinten bezogen auf eine Einbaustellung in der Gasturbine.
Fig. 3 zeigt in den Teilfiguren A) und B) eine Draufsicht und einen Schnitt durch eine Vertiefung des Verkleidungselements.
Fig. 4 zeigt eine Schnittdarstellung einer Verbindungsanordnung mit einem erfindungsgemäßen Verkleidungselement.

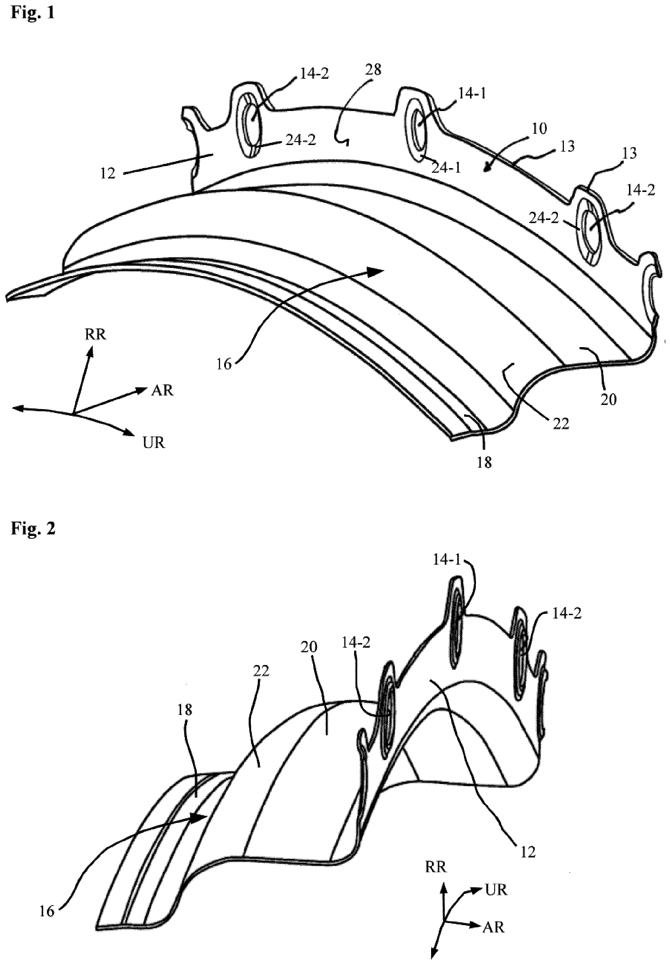

Die Fig. 1 und 2 zeigen ein im Wesentlichen ringförmig bzw. ringsegmentförmig ausgebildetes Verkleidungselement 10. Das Verkleidungselement 10 ist im vorliegenden Beispiel ein Hitzeschutzschild eine Gasturbine in dessen Turbinenbereich. Allerdings ist das Verkleidungselement nicht auf ein Hitzeschutzschild beschränkt, sondern kann auch ein anderes Bauteil einer Gasturbine, wie etwa ein abdeckendes bzw. verschalendes Verkleidungselement sein, wie beispielsweise ein Gehäuseteil oder dergleichen.

Das Verkleidungselement 10 umfasst einen Befestigungsabschnitt 12 auf, in dem mehrere Öffnungen 14-1, 14-2 vorgesehen sind. An den Befestigungsabschnitt 12 schließt sich ein Verkleidungsabschnitt 16 an. Der Befestigungsabschnitt 12 und der Verkleidungsabschnitt 16 sind einstückig miteinander ausgebildet. In der vorliegenden Ausführungsform erstreckt sich der Befestigungsabschnitt 12 bezogen auf seine Einbaulage in einer Gasturbine entlang der Umfangsrichtung UR und in Radialrichtung RR, wobei diese Richtungsangaben sich auf eine Maschinenachse der Gasturbine beziehen. Der Verkleidungsabschnitt 16, kann einen radial inneren Abschnitt 18 und einen radial äußeren Abschnitt 20 aufweisen, die durch einen Zwischenabschnitt 22 miteinander verbunden sind. Der Verkleidungsabschnitt erstreckt sich entlang der Umfangsrichtung UR und der Axialrichtung AR, so dass er im Wesentlichen orthogonal zum Befestigungsabschnitt 12 ausgerichtet ist. Im Bereich der Öffnungen 14-1, 14-2 liegt ein Rand 13 des Befestigungsabschnitts 12 radial weiter außen als zwischen zwei benachbarten Öffnungen. Anderes ausgedrückt kann auch gesagt werden, dass der Befestigungsabschnitt 12 eine sich verändernde Höhe aufweist, wobei die Höhe im Bereich der Öffnungen 14-1, 14-2 größer ist, als im Bereich zwischen zwei Öffnungen 14-1, 14-2.

Es wird allerdings darauf hingewiesen, dass der Befestigungsabschnitt nicht zwingend so ausgerichtet sein muss, wie dies in den Fig. 1 und 2 dargestellt ist. Vielmehr kann der Befestigungsabschnitt auch geneigt zur Radialrichtung RR und zur Axialrichtung verlaufen. Ferner ist es auch denkbar, dass der Befestigungsabschnitt sich entlang der Axialrichtung AR und der Umfangsrichtung UR erstreckt. Auch die Ausrichtung des Verkleidungsabschnitts 16 ist nicht auf die Darstellung der Fig. 1 und 2 eingeschränkt. Denkbar ist beispielsweise auch ein durchgehender Verkleidungsabschnitt, der beispielsweise geneigt zur Axialrichtung AR verläuft und eine Art Konus bildet.

Die Öffnung 14-1 ist im vorliegenden Beispiel als kreisförmiges Rundloch ausgebildet. Die Öffnungen 14-2 sind als Langlöcher ausgebildet. Im Befestigungsabschnitt 12 sind um die Öffnungen 14-1 und 14-2 jeweilige Vertiefungen 24-1 und 24-2 ausgebildet. Dabei weisen die Vertiefungen 24-1, 24-2 einen die jeweilige Öffnung 14-1, 14-2 umgebenden Randabschnitt 26 auf. Die Öffnungen 14-1, 14-2 sind dazu eingerichtet, eine Verbindungseinheit aufzunehmen, wie beispielsweise einen Bolzen, eine Schraube, insbesondere auch eine Schrauben-Mutter-Verbindung, oder ein Niet.

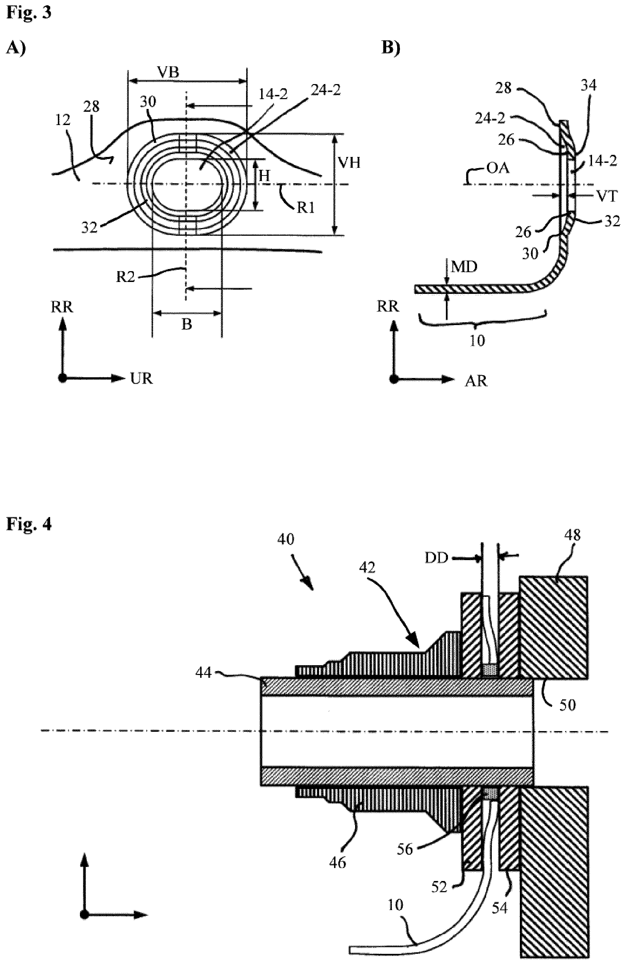

Aus der Draufsicht gemäß Fig. 3A) und der korrespondierenden Schnittdarstellung der Fig. 3B) ist beispielhaft eine Öffnung 14-2 in Form eines Langlochs dargestellt. Es kann sich dabei beispielsweise um das in Fig. 1 links von der Öffnung 14-1 dargestellte Langloch 14-2 handeln. Die Öffnung 14-2 weist eine Öffnungsachse OA auf, die im Wesentlichen zentral durch die Öffnung 14-2 hindurchgeht. Die Öffnungsachse entspricht im Wesentlichen einer Achse einer in die Öffnung 14-2 einzusetzenden Verbindungseinheit. In der Fig. 3A) ist die Vertiefung 24-2 in Form von konzentrischen Linien angedeutet, wobei diese Linien eine Art Höhenlinien repräsentieren. Ausgehend von einer vorderen Oberfläche 28, die im Wesentlichen in einer Oberflächenebene des Befestigungsabschnitts 12 liegt (entspricht in der Fig. 3A) der Zeichnungsebene), weist die Vertiefung 24-2 eine erste, insbesondere konvex ausgebildete Wölbung 30 und eine zweite, insbesondere konkav ausgebildete Wölbung 32 auf. Die Öffnung 14-2 wird begrenzt durch den Randabschnitt 26, der sich bezogen auf die Öffnungsachse OA radial innen an die zweite Wölbung 32 anschließt.

Der Randabschnitt 26 ist so ausgebildet, dass er im Wesentlichen parallel zur Oberfläche 28 des Befestigungsabschnitts 12 ausgebildet ist. Der Randabschnitt 26 ist ferner dazu eingerichtet, dass er mit seiner von der Oberfläche 28 abgewandten Seite 34, die man auch als hintere Fläche des Randabschnitts 26 bezeichnen kann, an einem zu verbindenden Bauteil, wie etwa einer Unterlegscheibe, einem Gehäusebauteil oder dergleichen, anliegen kann.

Die Vertiefung 24-2 weist im entspannten Zustand, d.h. einem Zustand, in dem der Befestigungsabschnitt 10 noch nicht befestigt ist, eine Tiefe VT auf, die von der Oberfläche 28 bevorzugt einen Abstand aufweist, der etwa dem 0,9-fachen bis 1,5-fachen der Materialdicke MD, insbesondere Blechdicke, des Verkleidungselements 10 entspricht. Bezogen auf die Öffnungsachse OA erstreckt sich die Öffnung 14-2 in eine erste Richtung R1, die in der Ausführungsform bei bestimmungsgemäßem Einbau des Verkleidungselements 10 der Umfangsrichtung UR entspricht. Ferner erstreckt sich die Öffnung 14-2 in eine zur ersten Richtung R1 orthogonale, zweite Richtung R2, die in der Ausführungsform bei bestimmungsgemäßem Einbau des Verkleidungselements 10 der Radialrichtung RR entspricht. Die Öffnung 14-2 weist in der ersten Richtung R1 eine Breite B auf und in der zweiten Richtung R2 eine Höhe H. Ferner weist die Vertiefung 24-2 in der ersten Richtung R1 eine Breite VB auf und der zweiten Richtung R2 eine Höhe VH.

Das Verhältnis von Breite B zu Höhe H (B/H) der Öffnung 14-2 ist im Falle eines Langlochs größer als 1, und kann vorzugsweise einen Wert bis etwa 2 aufweisen.

Das Verhältnis von Breite B der Vertiefung 24-2 zur Breite VB der Öffnung 14-2 ist im Fall des Langlochs größer als 1, und kann vorzugsweise einen Wert bis etwa 2 aufweisen.

Das eben unter Bezugnahme auf die Fig. 3A) und 3B) für eine langlochartige Öffnung 14-2 Gesagte gilt in analoger Weise auch für eine kreisförmige Öffnung 14-1 und einer zugehörigen Vertiefung 24-1 (Fig. 1). Bei einer kreisförmigen Öffnung 14-1 liegt das Verhältnis von Breite B zu Höhe H der Öffnung 14-1 bei 1. Es wird ferner darauf hingewiesen, dass die für das Langloch 14-2 beschriebenen Verhältnisse von Breite B zu Höhe H exemplarisch sind für die hier dargestellte Ausrichtung des Langlochs 14-2. Denkbar ist auch ein Langloch, das um 90° gedreht ist, so dass die Höhe H einen größeren Wert aufweist als die Breite B. In einem solchen Falle würde das Verhältnis B/H einen Wert von kleiner als 1 einnehmen.

In Fig. 4 ist eine Schnittdarstellung einer Verbindungsanordnung 40 mit einem Verkleidungselement 10 dargestellt. Die Verbindungsanordnung umfasst eine Verbindungseinheit 42. Die Verbindungseinheit 42 umfasst in diesem Beispiel einen Schraubbolzen 44 und eine Mutter 46, die auf den Schraubbolzen 44 aufgeschraubt ist. Der Schraubbolzen 44 ist ferner mit einem Bauteil 48 verbunden, insbesondere in einer Öffnung 50 des Bauteils 48 aufgenommen. Denkbar ist auch, dass der Schraubbolzen 44 mit dem Bauteil 48 materialschlüssige verbunden ist, beispielsweise verschweißt ist.

Das Verkleidungselement 10 ist mit seiner Öffnung 14-2 oder 14-2 über den Schraubbolzen 44 angeordnet. Anders ausgedrückt ist der Schraubbolzen 44 entlang der Öffnungsachse OA der Öffnung 14-1, 14-2 in die Öffnung eingeführt. Die Vertiefung 24-1, 24-2 der Öffnung ist zwischen zwei Unterlegscheiben 52, 54 aufgenommen, wobei die eine Unterlegscheibe 52 an der Mutter 46 anliegt und die andere Unterlegscheibe 54 am Bauteil 48 anliegt. Der Befestigungsabschnitt 12 liegt mit der Seite 34 des Randabschnitts 26 an der Unterlegscheibe 54 an. Damit beim Herstellen der Verbindung zwischen dem Verkleidungselement 10 und dem Bauteil 48 die Vertiefung durch Druck nicht abgeflacht wird, ist in der Öffnung 14-1, 14-2 eine Distanzhülse 56 aufgenommen. Die Distanzhülse 56 weist dabei eine axiale Dicke DD auf, die im Zusammengesetzten Zustand im Wesentlichen einem axialen Abstand entspricht von der Oberfläche 28 des Befestigungsabschnitts 12 zur Seite 34 des Randabschnitts 26 (Fig. 3B). Dabei kann die axiale Dicke DD der Distanzhülse bevorzugt kleiner sein als die Tiefe VT der Vertiefung zuzüglich der Materialdicke MD (Fig.3B). Hierdurch kann das Verkleidungselement 10 im Bereich der Öffnungen 14-1, 14-2 vorgespannt befestigt werden aufgrund der federnden Wirkung der Vertiefungen 24-1, 24-2. Je nach Ausgestaltung der Öffnungen 14-1, 14-2 können Festsitze oder Schiebesitze gebildet werden, so dass zusätzlich zur sicheren Befestigung mittels der Verbindungseinheit 42 festgelegt werden kann, ob eine relative Verschiebung von Verkleidungselement 10 und Bauteil 48 zueinander entlang einer Langlochöffnung 14-2 ermöglicht werden soll.

Durch die Ausgestaltung der Vertiefung 24-1, 24-2 im Bereich der Öffnungen 14-1, 14-2 kann auf Kleinteile wie etwa Tellerfedern verzichtet werden. Das Feder- bzw. Ausgleichselement für die Verbindungsanordnung 40 ist in Form der Vertiefung 24-1, 24-2 im Verkleidungselement 10 integriert. Die hier vorgestellte Verbindungsanordnung 40 dämpft Schwingungen und bietet einen Ausgleich für Wärmeausdehnungen.

Das Verkleidungselement 10 kann beispielsweise ein Hitzeschutzschild sein oder ein sonstiges Gehäuseelement. Das in Fig. 4 dargestellte weitere Bauteil 48 kann ein Gehäusebauteil, eine Art Rahmen- bzw. Strebenkonstruktion oder dergleichen der Gasturbine sein. Die Verbindungseinheit kann neben der beschriebenen Schrauben-Mutter-Verbindung auch als Niet ausgebildet sein.

### Bezugszeichenliste

- 10: Verkleidungselement
- 12: Befestigungsabschnitt
- 13: Rand
- 14-1: kreisförmige Öffnung
- 14-2: langlochförmige Öffnung
- 16: Verkleidungsabschnitt
- 18: radial innerer Abschnitt
- 20: radial äußerer Abschnitt
- 22: Zwischenabschnitt
- 24-1: kreisförmige Vertiefung
- 24-2: langlochförmige Vertiefung
- 26: Randabschnitt
- 28: Oberfläche
- 30: erste Wölbung
- 32: zweite Wölbung
- 34: Seite des Randabschnitts
- 40: Verbindungsanordnung
- 42: Verbindungseinheit
- 44: Schraubbolzen
- 46: Mutter
- 48: weiteres Bauteil
- 50: Öffnung
- 52: Unterlegscheibe
- 54: Unterlegscheibe
- 56: Distanzhülse

## Patentansprüche

1. Verkleidungselement, insbesondere Hitzeschildelement oder Gehäuseelement, einer Strömungsmaschine, insbesondere Gasturbine, umfassend:
einen Befestigungsabschnitt (12) mit wenigstens einer Öffnung (14-1, 14-2), durch die eine insbesondere stiftartig oder bolzenartig ausgebildete Verbindungseinheit (42) entlang einer Öffnungsachse (OA) einführbar ist,
einen an den Befestigungsabschnitt (12) anschließenden Verkleidungsabschnitt (16),
wobei der Befestigungsabschnitt (12) und der Verkleidungsabschnitt (16) einstückig sowie ringförmig oder ringsegmentförmig ausgebildet sind,
**dadurch gekennzeichnet, dass** die Öffnung (14-1, 14-2) in einer im Befestigungsabschnitt (12) ausgebildeten Vertiefung (24-21, 24-2) vorgesehen ist, wobei die Vertiefung (24-1, 24-2) im Wesentlichen konzentrisch um die Öffnung (14-1, 14-2) ausgebildet ist.

2. Verkleidungselement nach Anspruch 1, **dadurch gekennzeichnet, dass** die Vertiefung (24-1, 24-2) sickenartig ausgebildet ist

3. Verkleidungselement nach Anspruch 1 oder 2, **dadurch gekennzeichnet, dass** die Öffnung kreisförmig (14-1) oder langlochförmig (14-2) ausgebildet ist.

4. Verkleidungselement nach einem der vorhergehenden Ansprüche, **dadurch gekennzeichnet, dass** die Vertiefung (24-1, 24-2) eine bezogen auf die Öffnungsachse (OA) axiale Tiefe (VT) aufweist, die etwa dem 0,9-fachen bis 1,5-fachen einer Dicke (MD) des Befestigungsabschnitts (12) entspricht.

5. Verkleidungselement nach einem der vorhergehenden Ansprüche, **dadurch gekennzeichnet, dass** die Vertiefung (24-1, 24-2) einen die Öffnung (14-1, 14-2) umgebenden Randabschnitt (26) aufweist, wobei der Randabschnitt (26) im Wesentlichen parallel zu einer die Vertiefung (24-1, 24-2) umgebenden Oberfläche (28) des Befestigungsabschnitts (12) ausgebildet ist.

6. Verkleidungselement nach einem der vorhergehenden Ansprüche, **dadurch gekennzeichnet, dass** es wenigstens zwei Öffnungen (14-1, 14-2) mit einer jeweiligen Vertiefung (24-1, 24-2) umfasst, wobei der Befestigungsabschnitt (12) im Bereich der Öffnungen (14-1, 14-2) eine in einer Oberflächenebene des Befestigungsabschnitts (12) liegende Höhe (13) aufweist, die größer ist, als die Höhe (13) zwischen zwei benachbarten Öffnungen (14-1, 14-2).

7. Verkleidungselement nach einem der vorhergehenden Ansprüche, **dadurch gekennzeichnet, dass** es aus einem Metallblech oder aus karbonfaserverstärktem Kunststoff hergestellt ist.

8. Verkleidungselement nach einem der vorhergehenden Ansprüche, **dadurch gekennzeichnet, dass** die Vertiefung (14-1, 14-2) zwei Wölbungen (30, 32) in unterschiedliche Richtungen aufweist.

9. Verkleidungselement nach Anspruch 7 und 8, **dadurch gekennzeichnet, dass** die Vertiefung (24-1, 24-2) durch Tiefziehen des Metallblechs hergestellt ist.

10. Verbindungsanordnung in einer Strömungsmaschine, insbesondere Gasturbine, zwischen einem Verkleidungselement (10) nach einem der vorhergehenden Ansprüche und einem weiteren Bauteil (48) der Strömungsmaschine, wobei das Bauteil (48) und das Verkleidungselement (10) im Bereich der wenigstens einen Öffnung (14-1, 14-2) des Befestigungsabschnitts (12) des Verkleidungselements (10) mittels einer Verbindungseinheit (42) miteinander verbunden sind,
**dadurch gekennzeichnet, dass** der Befestigungsabschnitt (12) im Bereich der Vertiefung (24-1, 24-2) um die Öffnung (14-1, 14-2) näher am weiteren Bauteil (48) angeordnet ist als außerhalb der Vertiefung (24-1, 24-2) und dass um die Verbindungseinheit (42) herum wenigstens eine Unterlegscheibe (52, 54) angeordnet ist, die mit dem Befestigungsabschnitt (12) in Kontakt steht.

11. Verbindungsanordnung nach Anspruch 10, **dadurch gekennzeichnet, dass** um die Verbindungseinheit (42) herum zwei Unterlegscheiben (52, 54) angeordnet sind, zwischen denen der Befestigungsabschnitt (12) aufgenommen ist, wobei eine der Unterlegscheiben (54) am weiteren Bauteil (48) anliegt.

12. Verbindungsanordnung nach Anspruch 10 oder 11, **dadurch gekennzeichnet, dass** die Verbindungseinheit (42) eine Nietverbindung oder eine Schraubverbindung, insbesondere Schrauben-Mutter-Verbindung (44, 46), ist

13. Verbindungsanordnung nach einem der Ansprüche 10 bis 12, **dadurch gekennzeichnet, dass** im Bereich der Öffnung (14-1, 14-2) eine Distanzhülse (56) um die Verbindungseinheit (42) herum angeordnet ist.
